# EUROPEAN PATENT SPECIFICATION

(11) **EP 4 211 416 B1**
(45) Date of publication and mention of the grant of the patent: **06.11.2024**
(21) Application number: 21790249.3
(22) Date of filing: 11.08.2021
(51) Int. Cl.: F28D 9/00, F28D 21/00, F28F 9/00, F24F 12/00, F28F 9/02

(54) **RECUPERATOR MODULE FOR VENTILATION SYSTEMS**
REKUPERATORMODUL FÜR VENTILATIONSSYSTEM
MODULE DE RECUPERATION POUR SYSTEME DE VENTILATION

(30) Priority: 11.09.2020 PL 43526720
(43) Date of publication of application: 19.07.2023
(73) Proprietor: Swiss Rotors SP. Z.O.O., 00-843 Warszawa (PL)
(72) Inventor: SIEK, Tadeusz, 81-198 Pogórze (PL)
(74) Representative: Kwapich, Anna
(86) International application number: PCT/PL2021/000055
(87) International publication number: WO 2022/055377

(56) References cited:
- EP-A1- 0 835 416
- EP-A1- 3 594 586
- EP-A2- 2 428 758
- FR-A1- 2 315 674

## Description

The invention concerns a recuperator module for ventilation systems. It can be used in particular in large ventilation systems which require high medium flow rates. It can be installed both in the duct of the air handling and conditioning unit as its component, or as an independent unit in the duct of any ventilation system.

Known are many different structures of recuperators, which are heat exchangers in appropriate casings. Recuperators of the plate heat exchanger type represent one of the groups. In plate heat exchangers, streams of the medium flow in ducts formed between plate partitions which are given various shapes in order to increase the area of heat exchange. Known are cross recuperators fitted with rectangular plates, where the streams of the medium between which heat is exchanged flow in opposite directions in ducts perpendicular to one another. Also known are recuperators with hexagonal plate heat exchangers in which the plate partitions are hexagonal in shape, and the flow ducts run parallel to one another in their central part, thanks to which the path along which the heat is exchanged between the two streams flowing in the opposite directions gets extended. In the known recuperators featuring a single hexagonal heat exchanger, a stack of identical plates of a single heat exchanger arranged parallel to one another is encased in a housing the shape of which corresponds to the outline of the stack, where the housing does not cover the slanted edges of the plates which form the entrances to the flow ducts between the plates. The stack in the described housing, constituting a single hexagonal plate heat exchanger, is inserted in a ventilation duct so that the plates of the heat exchanger are positioned perpendicular to the partition in the duct which separates the two streams flowing in the duct in the opposite directions, whereas the two edges of the heat exchanger formed by the apexes at which the slanted edges of the plate stack converge are connected to the partition in the duct on both sides of the heat exchanger.

Known are many structures of a single hexagonal heat exchanger which differ from one another in the shape of the parallel ducts running separate from one another and formed by pleated, corrugated sheet plates stacked on one another, they also differ in the technical means used to combine the sheets into stacks and in the materials of which the sheets are made. Example solutions of such structures are disclosed in many patent publications. Disclosed in patent description US9670622B2 is a multilayer structure comprising a fine cellulose fibre layer, wherein the fibres differ in diameter, thickness, density, air permeability, etc. Known from the publication of the international patent application WO2015/121536A1 is a hexagonal structure of a plate heat exchanger where the plates are corrugated so that the crests and troughs are perpendicular to the direction in which the medium flows and feature bulges which separate the neighbouring plates from one another, where the heat exchanger is fitted with means which prevent condensate accumulation on the plates.

Known from the document published under No. FR2315674 is a recuperator module for ventilation systems comprising the features of the preamble of claim 1.

In order to increase effectiveness of heat exchange heat exchangers are connected in series i.e., arranged in the duct one after another, both in the case of recuperators of the cross heat exchanger type, and those of the hexagonal counterflow heat exchanger type. In such solutions the streams of medium flow through each of the heat exchangers, one after another.

The recuperator module for ventilation systems, comprising a hexagonal plate heat exchanger whereby the module takes the form of a set of hexagonal plate heat exchangers placed in a casing fitted with a rectangular base and a rectangular top wall parallel thereto, where the base and the top wall are connected to each other with two parallel side walls. The hexagonal plate heat exchangers are arranged in the casing in at least one column so that all hexagonal plates of the heat exchangers are parallel to the base and the top wall of the casing, and the longitudinal sections of the ducts within the heat exchangers run parallel to one another and to the side walls of the casing. Fixed between the base, the top wall, side walls, and external vertical edges of the columns of the heat exchangers are additional walls which form inlet and outlet spaces arranged alternately, identical on both sides of the module and partially screened so that each inlet space and each outlet space extends over the entire height of the module. According to the invention, the casing is a hexagonal casing in which two parallel side walls are in the shape of convex hexagons and where the side walls are additionally connected to each other with two opposite connecting elements at the level of their free apexes.

Preferably, the hexagonal plate heat exchangers are arranged into more than one column, where all columns are identical, run parallel to one another, and contact one another with longitudinal edges of the hexagonal plates of the heat exchangers, where the edges run parallel to the side walls of the casing.

In a preferable variant of the recuperator module the inlet and outlet spaces are formed using additional vertical walls and additional slanted walls. The additional vertical walls take the form of triangular plates parallel to the side walls of the casing and corresponding to them in shape, and are fitted on both sides of the hexagonal plate heat exchangers over the entire height of the casing between its base and its top wall, where the vertical edge of each additional vertical wall is connected to the external vertical edge of the column of the hexagonal plate heat exchangers, and the apexes of the additional vertical wall are connected to the base, top wall, and connecting element. The additional slanted walls take the form of rectangular plates, where one pair of opposite edges of these plates is connected to the slanted edges of the two neighbouring additional vertical walls, or to the slanted edge of the side wall and of the nearest additional vertical wall, while the other pair of the opposite edges of the plate is connected to the connecting element and the edge of the base or edge of the top wall. The additional slanted walls are arranged alternately under the connecting elements and over the connecting elements so that above each screened bottom part of the slanted walls of the columns of the hexagonal plate heat exchangers there is an unscreened top part of the same slanted walls of the columns of the hexagonal plate heat exchangers.

Preferably, the base comprises technical means to drain the condensate.

Most preferably, there are troughs formed in the base along both of its edges perpendicular to the side walls, where the troughs end with drainpipes on one of their ends.

In a particularly preferable variant of the recuperator module, the connecting elements of the casing are mounted in mid height of the columns of the hexagonal plate heat exchangers.

In one of the variants, the recuperator module comprises three identical columns of the hexagonal plate heat exchangers.

The invention solves the problem of improving effectiveness of the heat recovery process in ventilation systems without causing the need to substantially expand the space occupied by the recuperators in such systems. The fact allows to save space in an air handling unit, and in consequence enables achieving a compact structure and high efficiency of air handling units. The comfort of mounting and easy access for maintenance purposes is an additional advantage.

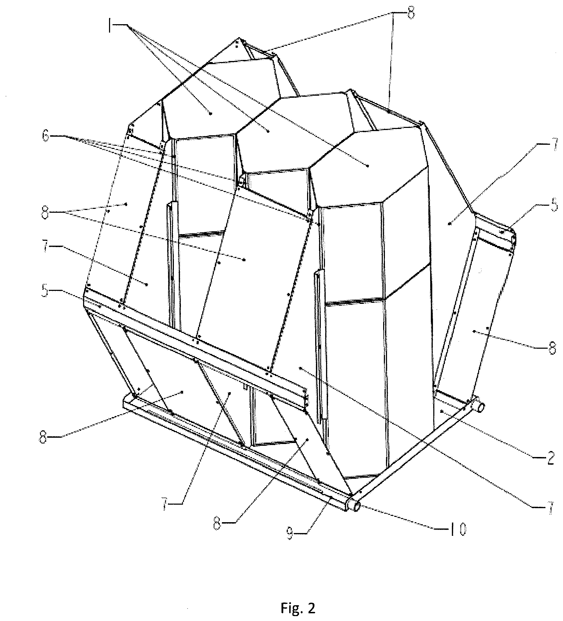

An example embodiment of the recuperator module for ventilation systems according to the invention is illustrated with a drawing, where Fig. 1 shows an axonometric view of the complete module in the first variant, Fig. 2 presents an axonometric view of the module in the first variant without the top wall and the side wall of the casing, Fig. 3 shows a view of the module in the first variant in cross section with marked counterflow streams of the flow of the medium, and Fig. 4 presents an axonometric view of the module in the second variant without the top wall and the side wall of the casing.

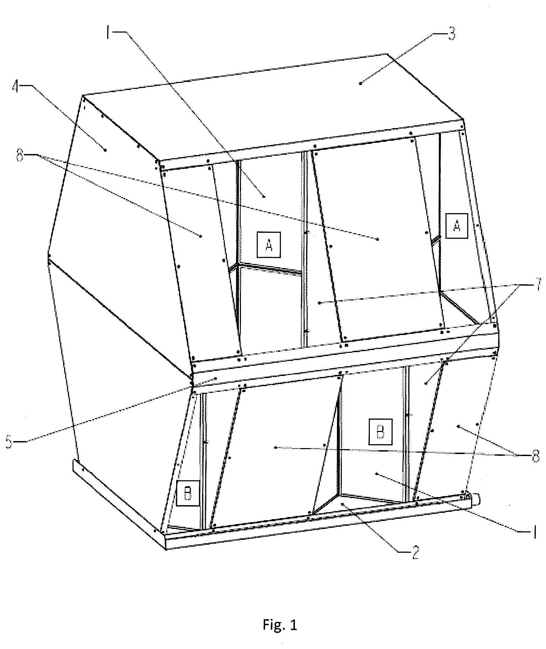

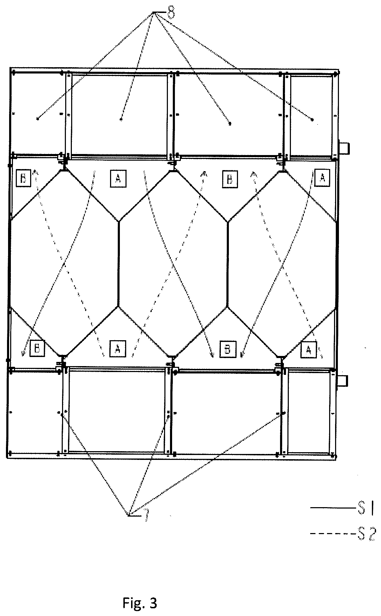

In the example embodiment shown on the drawing the recuperator module is given the form of a block with a hexagonal casing, inside which there is a set of identical hexagonal plate heat exchangers 1. The heat exchangers 1 are formed of a number of appropriately profiled parallel plates connected to one another so as to form the flow ducts for the medium, in particular air in ventilation systems, i.e., slanted flow ducts at the inlet and outlet and longitudinal flow ducts in the central part. In the hexagonal plate heat exchangers 1, which are exchangers of the counterflow type, the streams flowing in the opposite directions cross in the slanted sections of the ducts, whereas in the longitudinal sections of the ducts within these heat exchangers the streams of air flow next to each other from the opposite directions in counterflow. The hexagonal casing comprises a rectangular base 2 and a rectangular top wall 3, which are connected permanently and tightly on their two opposite sides to two identical side walls 4 parallel to each other and perpendicular to the base 2 and the top wall 3. Each side wall 4 is given the shape of a convex hexagon, symmetrical along the vertical and horizontal axes. In mid-height of the casing, on its both sides, the free apexes of one side wall 4 are connected to the corresponding free apexes of the other side wall 4 with the connecting element 5. The casing is placed in a ventilation duct (not shown on the drawing) so that the base 2, the top wall 3, and the two side walls 4 touch on the duct walls, and the connecting elements 5 are connected to the partitions (not shown on the drawing) which divide the duct into the inlet space and outlet space. In the first embodiment variant shown in Fig. 1, Fig., 2 and Fig. 3 the hexagonal plate heat exchangers 1 are arranged within the casing in three identical parallel vertical columns in such a way that the columns contact one another and that all hexagonal plates of the heat exchangers 1 are parallel to one another and to the base 2 and the top wall 3 of the casing, and the columns of the heat exchangers 1 contact one another with the side edges of the plates, where running along these side edges are parallel longitudinal ducts for the counterflow flow of the medium between the plates, and where the side edges are parallel to the side walls 4 of the casing. The outline of the horizontal cross-section across all parallel columns of the heat exchangers 1 corresponds to the outline of the top wall 3 of the casing, the external edges of the first and last column of the heat exchangers 1 touch tightly on the side walls 4 of the casing, and the top and bottom plates of the heat exchangers contact, respectively, the top wall 2 and the base 3 of the casing. The apexes of the slanted edges of the plates at the inlet and outlet of the ducts in the columns of the heat exchangers 1 form external vertical edges 6 of the columns of the heat exchangers 1, three on each side of the columns of the heat exchangers 1. Each external vertical edge 6 of the column is connected along its entire height to the edge of the additional vertical wall 7, the triangular shape of which corresponds to the shape of the side walls 4, and the apexes of which are connected to the base 2, connecting element 5 and the top wall 3. Fixed on both sides of the columns of the heat exchangers 1, between the connecting elements 5 and the base 2, and between the connecting elements 5 and the top wall 3 are additional rectangular slanted walls 8 arranged alternately above and below the connecting elements 5. In the top part of the module, above the connecting element 5, the first additional slanted wall 8 is connected tightly to the top slanted edge of the side wall 4, the top slanted edge of the first additional vertical wall 7, and to the connecting element 5 and the top wall 3 of the casing, whereas the second additional slanted wall 8 is connected tightly to the top slanted edges of the second and third additional vertical wall 7, and to the connecting element 5 and the top wall 3 of the casing. In the bottom part of the module, below the connecting element 5, the first additional slanted wall 8 is connected tightly to the bottom slanted edges of the first and second additional vertical wall 7, and to the connecting element 5 and the base 2, whereas the second additional slanted wall 8 is connected tightly to the bottom slanted edge of the third additional vertical wall 7, bottom slanted edge of the side wall 4, and to the connecting element 5 and the base 2. The positioning of the additional slanted walls 8 on both sides of the columns of the heat exchangers 1 is the same, i.e., the two sides represent a mirror reflection of each other. The thus arranged additional slanted walls 8 alternately screen the inlets and outlets of the ducts of the heat exchangers 1 in mid-height of the columns of the heat exchangers 1, above and below the connecting elements 5, in this way forming the inlet spaces A and outlet spaces B identical on both sides of the module, extending along the entire height of all columns of the heat exchangers 1, but partially screened. In a preferable embodiment variant, formed in the base 2 of the module casing along both of its edges perpendicular to the side walls 4 are troughs 9 which feature drainpipes 10 on one of their ends, where the drainpipes 10, once the module is installed in a ventilation duct, go through the duct walls and enable drainage of the condensate which accumulates under the heat exchangers.

In an example application of the invention the first inlet stream S1 of air flows between the additional vertical walls 7 in the top part of the module from one side of the module above the duct partition connected to the connecting element 5 of the module casing and gets into the unscreened inlet spaces A of the module, where the spaces incorporate the slanted edges of the plates of the heat exchangers 1, following which the flow streams down the additional slanted walls 8 in the bottom part of the module into the spaces incorporating the same slanted edges of the plates of the heat exchangers, and in this way the first inlet stream S1 is fed simultaneously to the inlets of all ducts across the entire height of all parallel columns of all heat exchangers 1. Once the first stream S1 has flowed through the heat exchangers 1 of the module, it gets to the opposite side of the module to the unscreened outlet space B in the bottom part of the module and to the additional slanted walls 8 in the top part of the module, along which it flows down to the spaces in the bottom part of the module incorporating the same slanted edges of the plates of the heat exchangers, and from there the stream flows in the bottom part of the duct as the first outlet stream S1. A similar path is followed by the second inlet stream S2 flowing above the partition in the duct on the other side of the module: the stream is fed simultaneously to the inlets of all ducts across the entire height of all parallel columns of the heat exchangers 1, and once the stream has flowed through the ducts of all heat exchangers it gets out on the opposite side in the bottom part of the module and flows in the bottom part of the duct as the second outlet stream S2. In another application variant of the module, when the inlet air streams flow in the duct under the partition, and the outlet streams flow above the partition, the unscreened inlet spaces A of the module are found in the bottom part of the module under the connecting elements 5, while the unscreened inlet spaces B are found in the top part of the module, above the connecting elements.

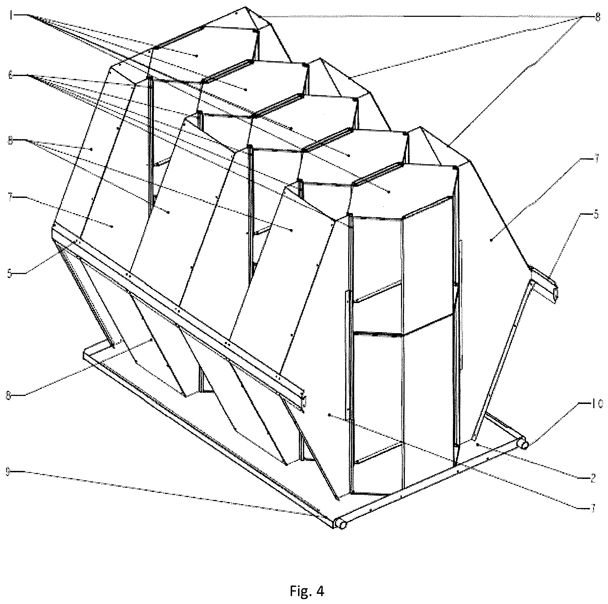

In the second example embodiment shown in Fig. 4 the recuperator module comprises five identical columns of hexagonal heat exchangers 1 and the correspondingly increased number of additional vertical walls 7 and additional slanted walls 8.

Depending on the needs and the place of installation, the invention may be executed in many various variants, while retaining the same substantial features. In particular, the recuperator module may comprise different numbers of columns of the hexagonal plate heat exchangers 1, the columns may differ in height, and the top part of the recuperator module above and connecting elements 5, and its bottom part under the connecting elements 5 can also be of different heights corresponding to the different heights of the inlet and outlet spaces in the duct where the recuperator module is to be installed.

The parallel connection of many identical hexagonal plate heat exchangers into a single system has made it possible to substantially increase the volume of the stream of medium flowing through the ventilation duct. This makes it possible to benefit from the advantages of a counterflow exchanger in large ventilation systems. The invention enables achieving high heat recovery values in any of the variants while satisfying many ecological requirements related to energy consumption because high efficiency of such heat exchanger modules allows to compensate consumption of energy by the ventilators. In addition, the module according to the invention facilitates the transport and installation of the recuperator in a ventilation system because it is combined into a single integral unit, which eliminates the need to assemble individual separate elements.

## Claims

1. The recuperator module for ventilation systems, comprising a hexagonal plate heat exchanger (1) whereby the module takes the form of a set of hexagonal plate heat exchangers (1) placed in a casing fitted with a rectangular base (2) and a rectangular top wall (3) parallel thereto, where the base and the top wall are connected to each other with two parallel side walls (4), and where the hexagonal plate heat exchangers (1) are arranged in the casing in at least one column so that all hexagonal plates of the heat exchangers (1) are parallel to the base (2) and the top wall (3) of the casing, and the longitudinal sections of the ducts within the heat exchangers (1) run parallel to one another and to the side walls (4) of the casing, whereas fixed between the base (2), the top wall (3), side walls (4), and external vertical edges (6) of the columns of the heat exchangers (1) are additional walls (7, 8) which form the inlet (A) and outlet (B) spaces arranged alternately, identical on both sides of the module and partially screened so that each inlet space (A) and each outlet space (B) extends over the entire height of the module **characterised in that** the casing is a hexagonal casing in which two parallel side walls (7, 8) are in the shape of convex hexagons and where the side walls (7, 8) are additionally connected to each other with two opposite connecting elements (5) at the level of their free apexes.

2. The recuperator module according to Claim 1 **characterised in that** the hexagonal plate heat exchangers (1) are arranged into more than one column, where all columns are identical, run parallel to one another, and contact one another with longitudinal edges of the hexagonal plates of the heat exchangers (1), where the edges run parallel to the side walls (4) of the casing.

3. The recuperator module according to Claim 2 **characterised in that** the inlet spaces (A) and outlet spaces (B) are formed using additional vertical walls (7) and additional slanted walls (8), where the additional vertical walls (7) take the form of triangular plates parallel to the side walls (4) of the casing and corresponding to them in shape, and are fitted on both sides of the hexagonal plate heat exchangers (1) over the entire height of the casing between its base (2) and its top wall (3), where the vertical edge of each additional vertical wall (7) is connected to the external vertical edge (6) of the column of the hexagonal plate heat exchangers (1), and the apexes of the additional vertical wall are connected to the base (2), top wall (3), and connecting element (5), whereas the additional slanted walls (8) take the form of rectangular plates, where one pair of opposite edges of these plates is connected to the slanted edges of the two neighbouring additional vertical walls (7), or to the slanted edge of the side wall (4) and of the nearest additional vertical wall (7), while the other pair of the opposite edges of the plate is connected to the connecting element (5) and the edge of the base (2) or edge of the top wall (3), and where the additional slanted walls (8) are arranged alternately under the connecting elements (5) and over the connecting elements (5) so that above each screened bottom part of the slanted walls of the columns of the hexagonal plate heat exchangers (1) there is an unscreened top part of the same slanted walls of the columns of the hexagonal plate heat exchangers (1).

4. The recuperator module according to Claim 3 **characterised in that** the base (2) comprises technical means to drain the condensate.

5. The recuperator module according to Claim 4 **characterised in that** there are troughs (9) formed in the base (2) along both of its edges perpendicular to the side walls (4), where the troughs end with drainpipes (10) on one of their ends.

6. The recuperator module according to Claims 1-5 **characterised in that** the connecting elements (5) are mounted in mid height of the columns of the hexagonal plate heat exchangers (1).

7. The recuperator module according to Claim 6 **characterised in that** it comprises three identical columns of the hexagonal plate heat exchangers (1).

## Patentansprüche

1. Rekuperatormodul für Ventilationssystem, bestehend aus dem Plattenwärmetauscher (1), wobei das Modul als eine Satz von hexagonalen Plattenwärmetauschern (1) im Gehäuse mit rechteckiger Basis (2) und parallel dazu verlaufenden rechteckigen oberen Wand (3) ausgestaltet ist, wobei die Basis und die obere Wand über zueinander parallele seitliche Wände (4) miteinander verbunden sind und wobei die hexagonalen Plattenwärmetauscher (1) im Gehäuse in mindestens einer Säule so angeordnet sind, dass alle hexagonalen Platten der Plattenwärmetauscher (1) parallel zur Basis (2) und zur oberen Wand (3) sind und die Längsabschnitte der Kanäle in den Wärmetauschern (1) zueinander und zu den seitlichen Wänden (4) parallel sind und zwischen der Basis (2), der oberen Wand (3), den seitlichen Wänden (4) und den vertikalen Außenkanten (6) der Säulen der Wärmetauscher (1) zusätzliche Wände (7, 8) angeordnet sind, welche Einlassräume (A) und Auslassräume (B) bilden, die abwechselnd, auf beiden Seiten gleich und teilweise so abgedeckt sind, dass jeder Einlassraum (A) und jeder Auslassraum (B) sich auf der ganzen Länge des Moduls erstreckt, **dadurch gekennzeichnet, dass** das Gehäuse hexagonal ist, dessen zwei parallele seitliche Wände (7, 8) die Form von konvexen Sechsecken haben und wobei die seitlichen Wände (7, 8) zusätzlich durch zwei gegenüberliegende Verbinder (5) auf der Höhe der freien Eckpunkte miteinander verbunden sind.

2. Rekuperatormodul nach Anspruch 1, **dadurch gekennzeichnet dass** die hexagonalen Plattenwärmetauscher (1) in mehreren Säulen angeordnet sind, wobei alle Säulen baugleich sind und sich über längliche Kanten der hexagonalen Platten der Wärmetauscher (1) berühren, die zu den seitlichen Wänden (4) des Gehäuses parallel sind.

3. Rekuperatormodul nach Anspruch 2, **dadurch gekennzeichnet, dass** die Einlassräume (A) und die Auslassräume (B) durch die zusätzlichen vertikalen Wände (7) und die zusätzlichen schrägen Wände (8) gebildet werden, wobei die vertikalen Wände (7) die Form von dreieckigen, zu den seitlichen Wänden (4) und zum Gehäuse parallelen Platten aufweisen und deren Form entsprechen, sich auf beiden Seiten der hexagonalen Plattenwärmetauschern (1) auf der ganzen Höhe des Gehäuses zwischen der Basis (2) und der oberen Wand (3) befinden, wobei die vertikale Kante jeder zusätzlicher vertikaler Wand (7) mit der vertikalen Außenkante (6) der Säule der hexagonalen Plattenwärmtauscher (1) verbunden ist und die Eckpunkte der vertikalen zusätzlichen Wand mit der Basis (2), der oberen Wand (3) und der Verbinder (5) verbunden sind, wobei die zusätzlichen schrägen Wände (8) die Form von rechteckigen Platten aufweisen, von denen jede mit einem Paar gegenüberliegender Kanten zweier benachbarter zusätzlicher vertikaler Wände (7) oder mit der schrägen Kante der seitlichen Wand (4) und der nahen zusätzlichen vertikalen Wand (7) und das zweite Paar gegenüberliegender Kanten mit dem Verbinder (5) und der Kante der Basis (2) oder der Kante der oberen Wand (3) verbunden ist, wobei die zusätzlichen schrägen Wände (8) abwechselnd unter den Verbindern (5) und über den Verbindern (5) so angeordnet sind, dass über jedem abgedeckten Bereich der schrägen Wände der Säulen der hexagonalen Plattenwärmetauscher (1) der freiliegende obere Bereich dieser schrägen Wände der Säulen der hexagonalen Plattenwärmetauscher (1) positioniert ist.

4. Rekuperatormodul nach Anspruch 3 **dadurch gekennzeichnet, dass** die Basis (2) über technische Mittel zum Kondensatablass verfügt.

5. Rekuperatormodul nach Anspruch 4, **dadurch gekennzeichnet, dass** an der Basis (2) Rinnen (9) entlang der beiden zu den seitlichen Wänden (4) parallelen Kanten angeformt sind, weiche an einem Ende mit Ablassrohren (10) abgeschlossen sind.

6. Rekuperatormodul nach Anspruch 1-5 **dadurch gekennzeichnet, dass** die Verbinder (5) in der Hälfte der hexagonalen Säulen der Plattenwärmetauscher (1) angeordnet sind.

7. Rekuperatormodul nach Anspruch 6, **dadurch gekennzeichnet, dass** es drei baugleiche Säulen der hexagonalen Plattenwärmetausche (1) enthält.

## Revendications

1. Module de récupération pour systèmes de ventilation, comprenant un échangeur de chaleur à plaques hexagonales (1), où le module a la forme d'un ensemble d'échangeurs de chaleur à plaques hexagonales (1) placés dans un boîtier ayant une base rectangulaire (2) et une paroi supérieure rectangulaire (3) parallèle à celle-ci, et la base et la paroi supérieure sont reliés l'une à l'autre par des parois latérales parallèles (4) et où les échangeurs de chaleur à plaques hexagonales (1) étant disposés dans le boîtier en au moins une colonne de telle sorte que toutes les plaques hexagonales des échangeurs de chaleur (1) sont parallèles à la base (2) et à la paroi supérieure (3) du boîtier, et que les sections longitudinales des canaux à l'intérieur des échangeurs de chaleur (1) sont parallèles entre elles et à les parois latérales (4) du boîtier, et entre la base (2), la paroi supérieure (3), les parois latérales (4) et les bords verticaux extérieurs (6) des colonnes d'échangeur de chaleur (1), sont fixées des parois supplémentaires (7, 8) qui créent des espaces d'entrée (A) et des espaces de sortie (B), disposés alternativement, identiques de part et d'autre du module et partiellement recouverts de sorte que chaque espace d'entrée (A) et chaque espace de sortie (B) s'étend sur toute la hauteur du module, **caractérisé en ce que** le boîtier est un boîtier hexagonal dont les deux parois latérales parallèles (7, 8) ont la forme d'hexagones convexes et dont les parois latérales (7, 8) sont extra reliées entre elles par deux connecteurs opposés (5) au niveau de leurs sommets libres.

2. Module de récupération selon la revendication 1, **caractérisé en ce que** les échangeurs de chaleur à plaques hexagonales (1) sont disposés en plus d'une colonne, toutes les colonnes étant identiques, parallèles entre elles et se touchant avec les bords longitudinaux des plaques des échangeurs de chaleur à plaques hexagonales (1), parallèles aux parois latérales (4) du boîtier.

3. Module de récupération selon la revendication 2, **caractérisé en ce que** les espaces d'entrée (A) et de sortie (B) sont formés par des parois verticales supplémentaires (7) et des parois diagonales supplémentaires (8), où les parois verticales supplémentaires (7) ont la forme de plaques triangulaires parallèles aux parois latérales (4) du boîtier et leurs formes correspondantes, sont situées de part et d'autre des échangeurs de chaleur à plaques hexagonales (1) sur toute la hauteur du boîtier entre sa base (2) et la paroi supérieure (3), et le bord vertical de chaque paroi verticale supplémentaire (7) est relié au bord vertical extérieur (6) de la colonne d'échangeurs de chaleur à plaques hexagonales (1), et les sommets de la paroi verticale supplémentaire sont reliés à la base (2), à la paroi supérieure (3) et au connecteur (5), tandis que les parois diagonales supplémentaires (8) ont la forme de plaques rectangulaires, dont chacune est reliée par une paire de bords opposés avec les bords diagonaux de deux parois verticales supplémentaires adjacentes (7) ou avec le bord diagonal de la paroi latérale (4) et de la paroi verticale supplémentaire (7) la plus proche, et par l'autre paire de bords opposés est reliée avec le connecteur (5) et le bord de la base (2) ou avec le bord de la paroi supérieure (3), et les parois diagonales supplémentaires (8) sont disposées alternativement sous les connecteurs (5) et au-dessus des connecteurs (5) de telle sorte qu'au-dessus de chaque partie inférieure couverte des parois diagonales des colonnes des échangeurs de chaleur à plaques hexagonales (1) se trouve une partie supérieure exposée des mêmes parois diagonales des colonnes des échangeurs de chaleur à plaques hexagonales (1).

4. Module de récupération selon la revendication 3, **caractérisé en ce que** la base (2) est munie de moyens techniques d'évacuation des condensats.

5. Module de récupération selon la revendication 4, **caractérisé en ce que** des gouttières (9) sont formées dans la base (2) le long des deux bords perpendiculaires aux parois latérales (4), qui se terminent par des tuyaux d'évacuation (10) à une extrémité.

6. Module de récupération selon la revendication 1 - 5 **caractérisé en ce que** les connecteurs (5) sont montés à mi-hauteur des colonnes des échangeurs à plaques hexagonales (1)

7. Module de récupération selon la revendication 6, **caractérisé en ce que** contient trois colonnes identiques d'échangeurs de chaleur à plaques hexagonales (1).
